# EUROPEAN PATENT APPLICATION

(11) **EP 4 512 575 A1**
(43) Date of publication of application: **26.02.2025**
(21) Application number: 22938303.9
(22) Date of filing: 06.12.2022
(51) Int. Cl.: B23Q 3/157, B23Q 3/155

(54) **SHANK LOCKING SLEEVE AND TOOL MAGAZINE**

(30) Priority: 20.04.2022 CN 202210418801
(71) Applicant: Kede Numerical Control Co., Ltd., Dalian, Liaoning 116000 (CN)
(72) Inventor: CHEN, Yufeng, Dalian, Liaoning 116000 (CN); DU, Changlin, Dalian, Liaoning 116000 (CN); REN, Zhihui, Dalian, Liaoning 116000 (CN); SONG, Mingshan, Dalian, Liaoning 116000 (CN); CAI, Chungang, Dalian, Liaoning 116000 (CN); FAN, Chunhong, Dalian, Liaoning 116000 (CN); GUO, Cuijuan, Dalian, Liaoning 116000 (CN); WANG, Lianyang, Dalian, Liaoning 116000 (CN); LI, Yapeng, Dalian, Liaoning 116000 (CN); HE, Xingjian, Dalian, Liaoning 116000 (CN); GONG, Xinglin, Dalian, Liaoning 116000 (CN); BAO, Wenlu, Dalian, Liaoning 116000 (CN)
(74) Representative: JD&P Patent Attorneys Joanna Dargiewicz & Partners
(86) International application number: PCT/CN2022/136809
(87) International publication number: WO 2023/202085

(57) **Abstract**

The present invention discloses a tool holder locking sleeve and a tool magazine, including: a tool sleeve; a pulling claw; an elastic component; and a pin, a tool holder accommodating cavity is provided inside the tool sleeve, one end of the tool holder accommodating cavity is provided with a tool holder installation opening, and another end of the tool holder accommodating cavity is provided with a pulling claw installation portion; the pulling claw includes a tool holder clamping portion and a pulling claw driving portion, the tool holder clamping portion is provided with a tool holder clamping surface, the pulling claw is hinged on the pulling claw installation portion, the elastic component connects the pulling claw and the tool sleeve, after the tool holder is inserted into the tool holder accommodating cavity, the pulling claw is driven by the elastic component so that the tool holder clamping portion is engaged into an inner diameter of the tool holder to achieve an engagement of the clamping surface of the tool holder with the inner diameter of the tool holder, and when an external force drives the pulling claw driving portion to rotate the pulling claw around the pin, the tool holder clamping portion is separated from the inner diameter of the tool holder. The present invention discloses a tool holder locking sleeve with the advantages of large locking force and reliable locking, being suitable for locking heavier tools, and having a simple structure.

## Description

### Technical Field

The present invention relates to the technical field of numerical control machine tool magazines, especially a tool holder locking sleeve and a tool magazine.

### Background Art

Currently, the tool holder locking sleeves used on tool magazines generally adopt a method where steel balls inside the tool sleeve are pressed against the inner wall of the tool holder through springs to lock the tool holder. The locking force is large, and the tool holder is only pulled out by the ATC manipulator. Due to the large locking force, the ATC tool changing mechanism deforms over time, loses accuracy quickly, and tends to have tool jamming issues, requiring maintenance after a period. The deformation of the ATC tool change arm leads to deviation of a tool change point, causing the tool holder to frequently collide with the spindle inner hole during tool change, resulting in damage to the spindle inner hole, loss of spindle accuracy, and increased spindle repair costs. Manual tool loading requires effort to insert the tool holder into the tool sleeve, which is very labor-intensive.

### Summary of Invention

The present invention solves the above problems by proposing a tool holder locking sleeve.

### Technical Problem

The technical means adopted by the present invention is as follows:
a tool holder locking sleeve, including a tool sleeve, a pulling claw, an elastic component, and
a pin;
the tool sleeve is provided with a tool holder accommodating cavity, one end of the tool holder accommodating cavity is provided with a tool holder installation opening for inserting or pulling out a tool holder, and another end of the tool holder accommodating cavity is provided with a pulling claw installation portion for installing the pulling claw;
   one end of the pulling claw is a tool holder clamping portion, another end of the pulling claw is a pulling claw driving portion, the tool holder clamping portion is provided with a tool holder clamping surface, the pulling claw is hinged on the pulling claw installation portion through the pin, the tool holder clamping portion is placed inside the tool holder accommodating cavity, and the pulling claw driving portion is placed outside the tool holder accommodating cavity;
   the elastic component connects the pulling claw and the pulling claw installation portion, and after the tool holder is inserted into the tool holder accommodating cavity from the tool holder installation opening, a restoring force of the elastic component drives the pulling claw to rotate around the pin so that the tool holder clamping portion is engaged into an inner diameter of the tool holder to achieve an engagement of the tool holder clamping surface with the inner diameter of the tool holder; and
when an external force drives the pulling claw driving portion to rotate the pulling claw around the pin, the tool holder clamping portion is separated from the inner diameter of the tool holder.

Further, the tool sleeve is a sleeve structure with an open end and a blind end, the open end is the tool holder installation opening, the blind end is the pulling claw installation portion, the pulling claw installation portion is provided with the pulling claw installation opening, and the pulling claw is placed in the pulling claw installation opening and hinged with the blind end.

Further, an angle between the tool holder clamping portion and the pulling claw driving portion is less than or equal to 90°, a pulling claw connection portion is provided between the tool holder clamping portion and the pulling claw driving portion, and the pulling claw connection portion is hinged with the pulling claw installation portion through the pin.

Further, a side of the tool holder clamping portion opposite to the pulling claw connection portion is a pulling claw limiting portion, the pulling claw limiting portion is provided with a limiting opening, and when the pulling claw is placed in the pulling claw installation opening and installed on the pulling claw installation portion, the limiting opening is engaged into a blind end wall of the tool sleeve.

Further, a length of the pulling claw driving portion is greater than a length of the tool holder clamping portion.

Further, an end of the tool holder clamping portion is also provided with a guiding surface.

Further, one end inside the tool holder accommodating cavity near the pulling claw installation portion is also fixed with a tool holder positioning key, and after the tool holder is inserted into the tool holder accommodating cavity from the tool holder installation opening, the tool holder positioning key is inserted into a high key groove of the tool holder.

Further, the end inside the tool holder accommodating cavity near the pulling claw installation portion is also fixed with a cylindrical pin, the cylindrical pin is set opposite to the tool holder positioning key, and after the tool holder is inserted into the tool holder accommodating cavity from the tool holder installation opening, the cylindrical pin is placed in a low key groove of the tool holder and contacts a bottom surface of the low key groove.

A tool magazine including: a tool magazine disk; a cylinder drive mechanism; a pulling claw drive device; and a tool holder locking sleeve according to the present invention, wherein the cylinder drive mechanism is installed on the tool magazine disk, the tool magazine disk is provided with a plurality of tool sleeve installation holes, a tool sleeve is installed in the tool sleeve installation holes, an end of the cylinder drive mechanism is fixed with a pulling claw drive device, the cylinder drive mechanism drives the pulling claw drive device to move to each of the tool sleeve installation holes to drive the pulling claw, and the pulling claw drive device drives the pulling claw to rotate.

Further, the pulling claw drive device includes a cylinder and a pressure wheel set on an output shaft of the cylinder, and the pressure wheel is hinged with the output shaft of the cylinder.

### Advantageous Effects of Invention

Compared with the prior art, the tool holder locking sleeve according to the present invention has the following advantages. The tool holder locking sleeve according to the present invention has a structure with a tool sleeve, a pulling claw, and an elastic component. The tool sleeve, the pulling claw, and the elastic component form a lever structure and clamp the tool holder from the inside, and thus, the structure has the advantages of large locking force and reliable locking, being suitable for locking heavier tools, and having a simple structure.

### Brief Description of Drawings

Fig. 1 is an axial view of a tool holder locking sleeve according to the present invention.
Fig. 2 is a front view of the tool holder locking sleeve according to the present invention.
Fig. 3 is a top view of the tool holder locking sleeve according to the present invention.
Fig. 4 is a bottom view of the tool holder locking sleeve according to the present invention.
Fig. 5 is a front view of a tool sleeve according to the present invention.
Fig. 6 is a top view of the tool sleeve according to the present invention.
Fig. 7 is a sectional view of the tool sleeve according to the present invention.
Fig. 8 is an axial view of the tool sleeve according to the present invention.
Fig. 9 is a structural view of a pulling claw according to the present invention.
Fig. 10 is a front view of the tool holder locking sleeve connected to a tool holder according to the present invention.
Fig. 11 is a partial sectional view of the tool holder locking sleeve connected to the tool holder according to the present invention.
Fig. 12 is a partial enlarged view of a dotted line area in Fig. 11.
Fig. 13 is a partial sectional view of the tool holder locking sleeve connected to the tool holder taken from a cylindrical pin and a tool holder positioning key according to the present invention.
Fig. 14 is a structural view of a tool magazine with the tool holder locking sleeve according to the present invention.

In the drawings: 1, tool sleeve; 10, tool holder accommodating cavity; 11, tool holder installation opening; 12, pulling claw installation portion; 13, pulling claw installation opening; 14, cutting groove; 15, supporting ear; 16, inner wall surface of blind end of tool sleeve; 2, pulling claw; 20, tool holder clamping portion; 21, pulling claw driving portion; 22, tool holder clamping surface; 23, pulling claw connection portion; 24, pulling claw limiting portion; 25, limiting opening; 26, limiting surface; 27, guiding surface; 3, elastic component; 30, screw rod; 31, nut; 32, screw; 4, pin; 5, pulling claw drive device; 50, cylinder; 51, pressure wheel; 60, tool holder positioning key; 61, cylindrical pin; 7, tool holder; 70, high key groove; 71, low key groove; 80, tool magazine disk; 81, tool sleeve installation hole; 82, cylinder drive mechanism

### Description of Embodiments

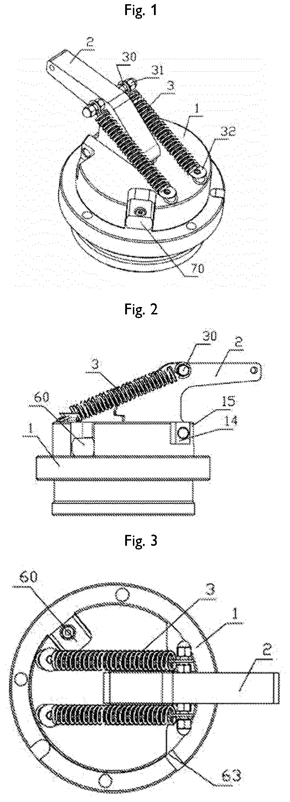

As shown in Figs. 1, 2, 3, and 4, the tool holder locking sleeve according to the present invention includes a tool sleeve 1, a pulling claw 2, an elastic component 3, and a pin 4.

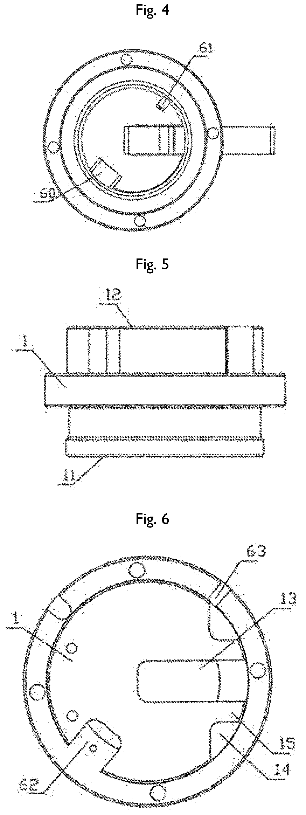

As shown in Figs. 5, 6, 7, and 8, the tool sleeve 1 is provided with a tool holder accommodating cavity 10 inside, the tool holder accommodating cavity is a conical cavity structure that fits a tool holder, one end of the tool holder accommodating cavity 10 is provided with a tool holder installation opening 11 for inserting or removing a tool holder 7, and another end of the tool holder accommodating cavity 10 is provided with a pulling claw installation portion 12 for installing the pulling claw 2. Specifically, in the present embodiment, the tool sleeve 1 is a sleeve structure with an open end and a blind end. The open end is the tool holder installation opening 11, and the blind end is the pulling claw installation portion 12. The pulling claw installation portion 12 is provided with a pulling claw installation opening 13, and the pulling claw 2 is placed in the pulling claw installation opening 13 and hinged with the blind end.

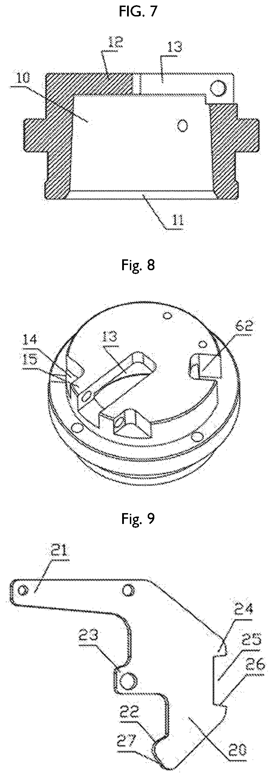

As shown in Fig. 9, one end of the pulling claw 2 is a tool holder clamping portion 20, and the other end is a pulling claw driving portion 21. The tool holder clamping portion 20 is provided with a tool holder clamping surface 22. The pulling claw 2 is hinged to the pulling claw installation portion 12 via the pin 4, with the tool holder clamping portion 20 placed inside the tool holder accommodating cavity 10 and the pulling claw driving portion 21 placed outside the tool holder accommodating cavity 10. Specifically, in the present embodiment, the pulling claw 2 is a curved steel plate structure, with the two edges of the steel plate being the tool holder clamping portion 20 and the pulling claw driving portion 21. The angle between the tool holder clamping portion 20 and the pulling claw driving portion 21 is less than or equal to 90°, and preferably, the angle between the tool holder clamping portion 20 and the pulling claw driving portion 21 is 90°. An outwardly protruding pulling claw connection portion 23 is provided between the tool holder clamping portion 20 and the pulling claw driving portion 21. As shown in Figs. 6, 7, and 8, a cutting groove 14 is provided on the edge side the blind end of the tool sleeve 1 respectively on both sides of the pulling claw installation opening 12, a supporting ear 15 is formed between the pulling claw installation opening 12 and the cutting groove 14, and the pulling claw connection portion 23 is provided with a through hole and is hinged to the supporting ear 15 via the pin 4.

The elastic component 3 connects the pulling claw 2 and the pulling claw installation portion 12, and after the tool holder 7 is inserted into the tool holder accommodating cavity 10 from the tool holder installation opening 11, a restoring force of the elastic component 3 drives the pulling claw 2 to rotate around the pin 4 so that the tool holder clamping portion 20 is engaged into an inner diameter of the tool holder 7 to achieve the engagement of the tool holder clamping surface 22 with the inner diameter of the tool holder 7. Specifically, in the present embodiment, as shown in Figs. 1, 2, and 3, the elastic member 3 is a tension spring. One such tension spring is provided on each of the both sides of the pulling claw 2. One end of the tension spring is fixed to the pulling claw installation portion 12 (an outer end wall of the blind end of the tool sleeve) by a screw 32, and the other end of the tension spring is fixed to the pulling claw 2 by a nut 31 and a screw rod 30.

When an external force drives the pulling claw driving portion 21 to rotate the pulling claw 2 around the pin 4, the tool holder clamping portion 20 is separated from the inner diameter of the tool holder 7. Specifically, in the present embodiment, a pulling claw drive device 5 is used to drive the pulling claw 2. The pulling claw drive device 5 can drive the pulling claw driving portion 21 to rotate the pulling claw 2 around the pin 4, thereby separating the tool holder clamping portion 20 from the inner diameter of the tool holder 7. In the present embodiment, the pulling claw drive device 5 includes a cylinder 50 and a pressure wheel 51 arranged on the output shaft of the cylinder 50. The output shaft of the cylinder is arranged in a direction perpendicular to a blind end surface of the tool sleeve, and the pressure wheel 51 is hinged to the output shaft of the cylinder 50.

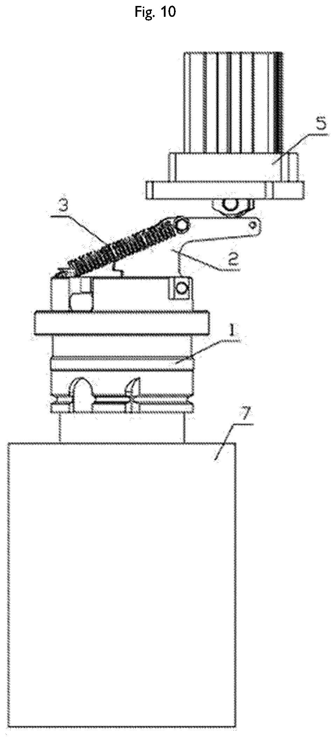

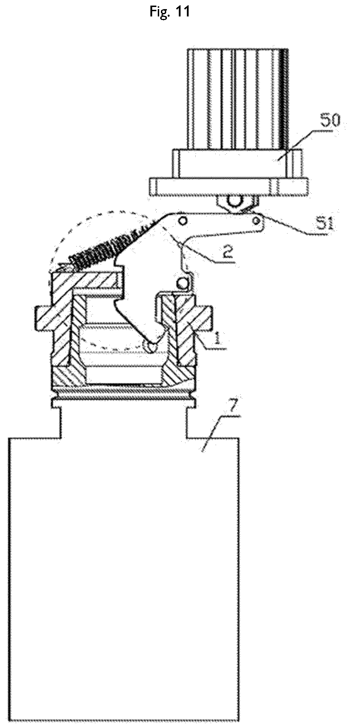

The tool holder locking sleeve according to the present invention, as shown in Figs. 10 and 11, operates as follows: when the tool holder is inserted into the tool holder accommodating cavity through the tool holder installation opening, the side wall of the tool holder can be inserted into the gap between the tool holder clamping portion and the inner diameter of the tool sleeve. This allows the tool holder clamping portion to extend into the inner diameter of the tool holder. The inner diameter of the tool holder is provided with an inclined surface, and the tool holder clamping surface abuts against this inclined surface. Additionally, the tool holder clamping portion presses against the inner diameter of the tool holder under the tension of the elastic member, thereby clamping the tool holder. The tool holder locking sleeve disclosed in this application clamps the tool holder from the inside under the tension of a spring, thereby offering advantages of large locking force and reliable locking, being suitable for locking heavier tools, and having a simple structure with high reliability, long maintenance cycles, and reduced risk of damage to the inner wall of the spindle hole.

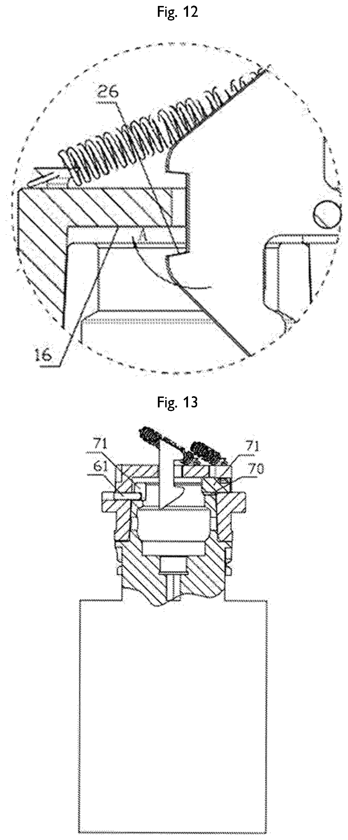

Further, a side of the tool holder clamping portion 20 opposite to the pulling claw connection portion 23 is a pulling claw limiting portion 24, the pulling claw limiting portion 24 is provided with a limiting opening 25, and when the pulling claw 2 is placed in the pulling claw installation opening 13 and installed on the pulling claw installation portion 12, the limiting opening 25 is engaged into a blind end wall of the tool sleeve 1. Due to the presence of the limiting opening, during the process where the cylinder drives the pulling claw to rotate through the pressure wheel with the direction of rotation indicated by an arrow A in Fig. 12, the side wall surface of the limiting opening located within the tool holder accommodating cavity can abut against an inner wall surface 16 of the blind end. This limits the rotation of the pulling claw, thereby facilitating the separation of the tool holder from the tool sleeve and improving the separation efficiency between the tool holder and the tool sleeve.

Furthermore, the length of the pulling claw driving portion 21 is greater than the length of the tool holder clamping portion 20. Such a lever structure allows a smaller driving force to drive the separation of the pulling claw, thereby enabling the use of a smaller cylinder model and reducing costs. Simultaneously, the tension of the elastic component, through the lever principle, is such that a smaller tension of the tension spring is used to obtain a larger locking force at the tool holder clamping portion, thereby enabling the tool holder locking sleeve according to the present invention to obtain a larger locking force.

Furthermore, as shown in Fig. 9, the end of the tool holder clamping portion 20 is additionally provided with a guiding surface 27. In the present embodiment, the guiding surface is an arc-shaped surface arranged at the end of the tool holder clamping portion. The guiding surface causes the gap between the tool holder clamping portion and the inner diameter of the tool sleeve to gradually decrease from the end of the tool holder installation opening to the other end, thereby facilitating the guiding during the insertion process of the tool holder, and consequently making it easier for the tool holder to be inserted between the tool holder clamping portion and the inner wall of the tool sleeve.

Furthermore, as shown in Fig. 13, at the end near the pulling claw installation portion 12 inside the tool holder accommodating cavity 10, there is also fixed a tool holder positioning key 60. After the tool holder 7 is inserted into the tool holder accommodating cavity 10 through the tool holder installation opening 11, the tool holder positioning key 60 is inserted into a high key groove 70 of the tool holder 7. Specifically, a tool holder positioning key installation groove 62 is provided on the outer wall of the end of the pulling claw installation portion of the tool sleeve 1. The tool holder positioning key 60 is fixed inside the tool holder positioning key installation groove 62 by screws, allowing a portion of the tool holder positioning key to extend into the tool holder accommodating cavity. Due to the provision of the tool holder positioning key, the accuracy of the tool holder insertion into the tool sleeve can be ensured. That is, when the tool holder is inserted into the tool sleeve, the tool holder positioning key 60 is inserted into the high key groove of the tool holder, thereby providing orientation for the tool holder and tool tip.

Furthermore, at the end near the pulling claw installation portion 12 inside the tool holder accommodating cavity 10, there is also fixed a cylindrical pin 61, which is positioned opposite to the tool holder positioning key 60. After the tool holder 7 is inserted into the tool holder accommodating cavity 10 through the tool holder installation opening 11, the cylindrical pin 61 is placed in a low key groove 71 of the tool holder 7 and contacts the bottom surface of the low key groove 71. Specifically, on the outer wall of the end of the pulling claw installation portion of the tool sleeve 1, a cylindrical pin installation hole 63 is provided on the side opposite to the tool holder positioning key installation groove. The cylindrical pin is installed inside the cylindrical pin installation hole 63. Due to the installation of the cylindrical pin opposite to the tool holder positioning key, the cylindrical pin contacts the bottom surface of the low key groove of the tool holder, preventing the tool holder from being installed reversely in the high and low key direction. That is, when the high and low key groove direction of the tool holder is reversed, the bottom surface of the high key groove of the tool holder interferes with the cylindrical pin, preventing the tool holder from being properly installed. This results in unsuccessful installation of the tool holder, serving as a reminder to the operator.

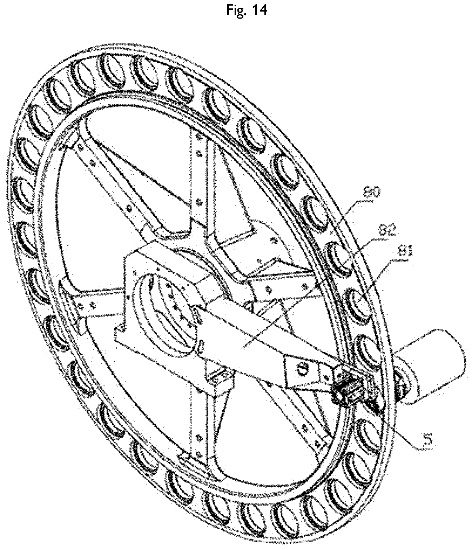

Fig. 14 shows a tool magazine according to the present invention, including: a tool magazine disk 80, a cylinder drive mechanism 82, and the tool holder locking sleeve disclosed in the present application. The cylinder drive mechanism 82 is installed on the tool magazine disk 80, which is provided with a plurality of tool sleeve installation holes 81. The tool sleeve 1 is installed in the tool sleeve installation holes 81. At the end of the cylinder drive mechanism 82, there is fixed a pulling claw drive device 5. The cylinder drive mechanism 82 can drive the pulling claw drive device 5 to move to each of the tool sleeve installation holes 81 to drive the pulling claw. In the present embodiment, the tool magazine disk shown in the drawings is circular, with the cylinder drive mechanism installed at the center of the circular tool magazine disk. The cylinder drive mechanism can rotate under the drive of a drive device such as a motor. The end of the cylinder drive mechanism is provided with the pulling claw drive device 5. The rotation of the cylinder drive mechanism enables the pulling claw drive device to move to each of the tool sleeve installation holes. The pulling claw drive device can drive the pulling claws at the corresponding positions to achieve the separation of the tool holder from the tool sleeve.

The above description is only a preferred embodiment of the present invention, but the protection scope of the present invention is not limited to this. Any equivalent replacements or changes made by a person skilled in the art within the technical scope disclosed by the present invention according to the technical solution of the present invention and the inventive concept thereof should be within the protection scope of the present invention.

## Claims

1. A tool holder locking sleeve, comprising: a tool sleeve; a pulling claw; an elastic component; and a pin, wherein
the tool sleeve is provided with a tool holder accommodating cavity, one end of the tool holder accommodating cavity is provided with a tool holder installation opening for inserting or pulling out a tool holder, and another end of the tool holder accommodating cavity is provided with a pulling claw installation portion for installing the pulling claw,
one end of the pulling claw is a tool holder clamping portion, another end of the pulling claw is a pulling claw driving portion, the tool holder clamping portion is provided with a tool holder clamping surface, the pulling claw is hinged on the pulling claw installation portion through the pin, the tool holder clamping portion is placed inside the tool holder accommodating cavity, and the pulling claw driving portion is placed outside the tool holder accommodating cavity,
the elastic component connects the pulling claw and the pulling claw installation portion, and after the tool holder is inserted into the tool holder accommodating cavity from the tool holder installation opening, a restoring force of the elastic component drives the pulling claw to rotate around the pin so that the tool holder clamping portion is engaged into an inner diameter of the tool holder to achieve an engagement of the tool holder clamping surface with the inner diameter of the tool holder, and
when an external force drives the pulling claw driving portion to rotate the pulling claw around the pin, the tool holder clamping portion is separated from the inner diameter of the tool holder.

2. The tool holder locking sleeve according to claim 1, wherein the tool sleeve is a sleeve structure with an open end and a blind end, the open end is the tool holder installation opening, the blind end is the pulling claw installation portion, the pulling claw installation portion is provided with the pulling claw installation opening, and the pulling claw is placed in the pulling claw installation opening and hinged with the blind end.

3. The tool holder locking sleeve according to claim 2, wherein an angle between the tool holder clamping portion and the pulling claw driving portion is less than or equal to 90°, a pulling claw connection portion is provided between the tool holder clamping portion and the pulling claw driving portion, and the pulling claw connection portion is hinged with the pulling claw installation portion through the pin.

4. The tool holder locking sleeve according to claim 3, wherein a side of the tool holder clamping portion opposite to the pulling claw connection portion is a pulling claw limiting portion, the pulling claw limiting portion is provided with a limiting opening, and when the pulling claw is placed in the pulling claw installation opening and installed on the pulling claw installation portion, the limiting opening is engaged into a blind end wall of the tool sleeve.

5. The tool holder locking sleeve according to any one of claims 1 to 4, wherein a length of the pulling claw driving portion is greater than a length of the tool holder clamping portion.

6. The tool holder locking sleeve according to claim 5, wherein an end of the tool holder clamping portion is also provided with a guiding surface.

7. The tool holder locking sleeve according to claim 1, wherein one end inside the tool holder accommodating cavity near the pulling claw installation portion is also fixed with a tool holder positioning key, and after the tool holder is inserted into the tool holder accommodating cavity from the tool holder installation opening, the tool holder positioning key is inserted into a high key groove of the tool holder.

8. The tool holder locking sleeve according to claim 7, wherein the end inside the tool holder accommodating cavity near the pulling claw installation portion is also fixed with a cylindrical pin, the cylindrical pin is set opposite to the tool holder positioning key, and after the tool holder is inserted into the tool holder accommodating cavity from the tool holder installation opening, the cylindrical pin is placed in a low key groove of the tool holder and contacts a bottom surface of the low key groove.

9. A tool magazine comprising: a tool magazine disk; a cylinder drive mechanism; a pulling claw drive device; and a tool holder locking sleeve according to any one of claims 1 to 8, wherein the cylinder drive mechanism is installed on the tool magazine disk, the tool magazine disk is provided with a plurality of tool sleeve installation holes, a tool sleeve is installed in the tool sleeve installation holes, an end of the cylinder drive mechanism is fixed with a pulling claw drive device, the cylinder drive mechanism drives the pulling claw drive device to move to each of the tool sleeve installation holes to drive the pulling claw, and the pulling claw drive device drives the pulling claw to rotate.

10. The tool magazine according to claim 9, wherein the pulling claw drive device includes a cylinder and a pressure wheel set on an output shaft of the cylinder, and the pressure wheel is hinged with the output shaft of the cylinder.
